# EUROPÄISCHE PATENTANMELDUNG

(11) **EP 0 806 590 A1**
(43) Veröffentlichungstag der Anmeldung: **12.11.1997**
(21) Anmeldenummer: 96107360.8
(22) Anmeldetag: 09.05.1996
(51) Int. Cl.: F16H 19/00, F16G 1/00

(54) **Trägheitsarmes Kraftübertragungselement**

(71) Anmelder: Walczak, A., Dipl.-Ing., 61231 Bad Nauheim (DE)
(72) Erfinder: Walczak, A., Dipl.-Ing., 61231 Bad Nauheim (DE)
(74) Vertreter: Säger, Manfred, Dipl.-Ing.

(57) **Zusammenfassung**

Ein trägheitsarmes Kraftübertragungselement zur Übertragung einer von einem Antriebselement (20) ausgehenden Antriebsbewegung auf ein angetriebenes Element (22) vermittels einer Schraubenfeder (10) ist dadurch gekennzeichnet, daß im Inneren der Windungen (12) der Schraubenfeder (10) ein Zugseil (14) angeordnet ist, das an mindestens zwei Anlenkpunkteb (16) an der Schraubenfeder (10) befestigbar ist.

## Beschreibung

Die vorliegende Erfindung betrifft ein trägheitsarmes Kraftübertragungselement gemäß den Oberbegriff des Hauptanspruchs.

Kraftübertragungselemente, bei denen die Kraftübertragung durch eine Schraubenfeder erfolgt, sind bekannt. In der US-A 1 586 353 ist ein Antriebselement beschrieben, bei dem eine endlose Spiralfeder über Keilscheiben geführt wird.

Die DE-PS 95 794 beschreibt ein Seilgetriebe, das aus Scheiben und einem schraubenförmigen Draht besteht, wobei die Scheiben mit Ansätzen versehen sind, die zwischen die Schraubenwindungen des Drahtes greifen.

In der FR-A 2 473 138 ist ein Antriebselement beschrieben, bei dem die Kraftübertragung durch Eingriff von Zahnrädern in eine Schraubenfeder bewirkt wird.

Solche Antriebe haben sich seit langer Zeit bewährt. Sie haben aber den Nachteil, daß sie infolge der Elastizität der Schraubenfeder eine Antriebskraft nicht immer schlupffrei übertragen.

Aufgabe der vorliegenden Erfindung ist es, ein Kraftübertragungselement zu schaffen, das die Elasizität des Schraubenfederantriebs beibehält, dabei aber den nachteiligen Schlupf vermeidet

Gelöst wird diese Aufgabe erfindungsgemäß mit einem gattungsgemäßen Kraftübertragungselement mit den Merkmalen des Kennzeichens des Hauptanspruchs. Die Unteransprüche geben bevorzugte Ausgestaltungen der Erfindung wieder.

Die zur Übertragung der Bewegungen verwendete Schraubenfeder enthält im Inneren der Windungen, die von der Schraubenfeder gebildet werden, ein Zugseil, das beispielsweise aus einem üblichen Drahtseil gebildet werden kann. Dieses Zugseil ist im allgemeinen an zwei Anlenkpunkten an den inneren Umfangsflächen der Windungen der Schraubenfeder befestigt. Nach Bedarf können auch mehr als zwei Anlenkpunkte vorgesehen sein.

Die Schraubenfeder kann als endlose Schleife ausgebildet sein, wenn eine Drehbewegung übertragen werden soll. Sie kann aber auch endlich ausgestaltet sein, wenn lediglich eine Hin- und Herbewegung übertragen werden soll. Beim Einsatz einer endlichen Schraubenfeder ist es in Abhängigkeit vom Anwendungszweck nicht immer erforderlich, daß die Schraubenfeder über der gesamten Weg, den die Bewegung übertragen werden soll, sich erstreckt. In vielen Anwendungsfällen genügt es, wenn die Länge der Schraubenfeder der Längenerstreckung des Bewegungsablaufes entspricht und darüber hinaus gehende Übertragungswege lediglich von dem Zugseil Überbrückt werden.

Sowohl als Antriebselement als auch als Abtriebselement können die bei Schraubenfedern üblichen Elemente eingesetzt werden, wie beispielsweise Zahnräder, Zahnstangen, Gewindeschrauben, Schnecken, Rollen oder Keil(riemen)scheiben.

Durch die Kombination von Schraubenfeder und darin angelenktem Zugseil ergibt sich ein Antriebselement mit vielen Vorteilen: Der Kontakt zwischen dem Antriebselement und der Schraubenfeder bedingt die Elastizität des Antriebs gegenüber Antriebsstößen. Dadurch wird der Verschleiß und damit verbundenes Spiel verringert. Andererseits wird durch das an den Anlenkpunkten befestigte Zugseil diese Elastizität bei der Übertragung der Antriebsbewegung wieder kompensiert, sodaß eine elastische und dabei doch präzise Kraftübertragung ermöglicht wird. Durch die Kombination von Schraubenfeder und Zugseil, die sich hinsichtlich ihrer Belastungsfähigkeit ergänzen, ist auch mit einer kleinen Dimensionierung dieser beiden Elemente eine hohe Belastung möglich. Infolgedessen kann das Kraftübertragungselementmit kleinen Massen trägheitsarm ausgebildet werden, was insbesondere für die schnelle exakte Übertragung elektronisch angesteuerter Bewegungen vorteilhaft ist.

Die Befestigung des Zugseils an den Anlenkpunkten der Schraubenfeder kann über nachstellbare Befestigungselemente erfolgen, wodurch eine Dehnung von Zugseil und Schraubenfeder kompensiert werden kann. Die Befestigungselemente sind dabei vorzugsweise selbstspannend nachstellbar.

Die Erfindung wird nachfolgend anhand der Figurenbeschreibung beispielhaft näher erläutert, wobei alle in der Figurenbeschreibung enthaltenen Merkmale als erfindungswesentlich angesehen werden. Die Figurenbeschreißung nimmt dabei auf folgende Figuren bezug:

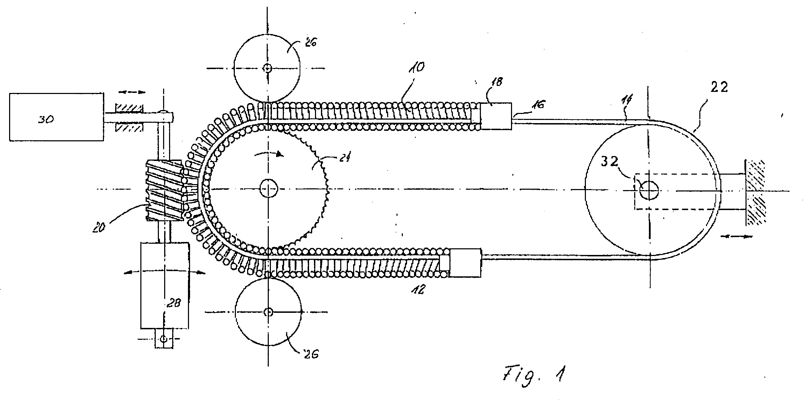

- Figur 1: zeigt ein Kraftübertragungselement für einen endlichen Bewegungsablauf mit einer endlichen Schraubenfeder und einem endlosen Zugseil;
- Figur 2: zeigt ein selbstspannend nachstellbares Befestigunselement für die Schraubenfeder.

Eine Schraubenfeder 10 läuft U-förmig abgewinkelt über eine Führungsrolle 24 und wird durch ein Antriebselement 20 in Form einer Schnecke angetrieben Zusätzliche Andruckrollen 26 sichern eine präzise Führung der Schraubenfeder 10 auf der Führungsrolie 24. Das Antriebselement 20 wird durch einen Motor 28 angetrieben. Die aus Motor 28 und Antriebselement 20 bestehende Antriebseinheit kann durch einen Elektromagneten 30 mit der Schraubenfeder 10 in Eingriff gebracht oder von dieser weg bewegt werden.
Innerhalb der Windungen 12 der Schraubenfeder 10 ist ein Zugseil 14 frei beweglich gelagert. Das endlose Zugseil 14 ist an den Beiden Enden der endlichen Schraubenfeder 10 an zwei Anlenkpunkten 16 vermittels Befestigungselementen 18 befestigt. Das Zugseil 14 verläuft von der Schraubenfeder 10 ausgehend über ein angetriebenes Element 22 in Form einer Keilscheibe. Das angetriebene Element 22 übertragt die Bewegungsenenrgie in Form einer Drehbewegung auf ihre Welle 32.

In einer weiteren Ausführungsform kann die Schraubenfeder 10 auch endlos über die Führungsrolle 24 und das angetriebene Element 22 verlaufen.

Anstelle der Schnecke als Antriebselement 20 kann auch ein Zahnrad vorgesehen sein.

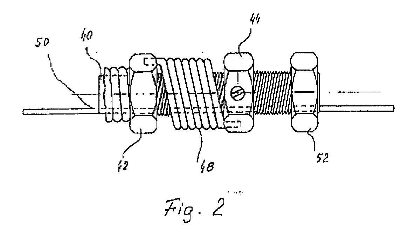

Ein selbstspannend nachstellbares Befestigungselement 18, wie es in der Figur 2 dargestellt ist, enthält eine Gewindestange 40, auf der eine Federhaltemutter 42 und eine Federfeststellmutter 44 drehbar sind. Die Federfeststellmutter 44 ist mit einer Feststellschraube auf der Gewindestange 40 arretierbar. Zwischen der Federhaltemutter 42 und der Federfeststellmutter 44 ist eine Spiralfeder 48 auf der Gewindestange 40 angeordnet.
Die Schraubenfeder 10 wird so auf der Gewindestange 40 geführt, daß sie die Federhaltemutter 42 beaufschlagt.
In der Gewindestange 40 ist eine Führungsnut 50 angeordnet, durch die das Zugseil 14 geführt wird. Durch Vorspannen der Federhaltemutter 42 gegen die Federfeststellmutter 44 wird das Zugseil 14 auf Spannung gehalten.
Eine Einstellmutter 52 dient zum Einstellen der Position des Befestigungselements.

## Patentansprüche

1. Trägheitsarmes Kraftübertragungselement zur Übertragung einer von einem Antriebselement ausgehenden Antriebsbewegung auf ein angetriebenes Element vermittels einer Schraubenfeder,
**dadurch gekennzeichnet**, **das**
im Inneren der Windungen (12) der Schraubenfeder (10) ein Zugseil (14) angeordnet ist, das an mindestens zwei Anlenkpunkten (16) an der Schraubenfeder (10) befestigbar ist.

2. Kraftübertragungselement nach Anspruch 1, dadurch gekennzeichnet, daß
das Antriebselement (20) und/oder das angetriebene Element (22) ein Zahnrad, eine Zahnstange, Schraube, Schnecke, Rolle oder Keilscheibe ist.

3. Kraftübertragungselement nach Anspruch 1, dadurch gekennzeichnet, daß
das Zugseil (14) an den Anlenkpunkten (16) durch nachstellbare Befestigungselemente (18) befestigbar ist.

4. Kraftübertragungselement nach den Ansprüchen 1 und 3, dadurch gekennzeichnet, daß
die Befestigungselemente (18) selbstspannend nachstellbar sind.

5. Kraftübertragungselement nach Anspruch 1, dadurch gekennzeichnet, daß
die Schraubenfeder (10) und das Zugseil (14) als endlose Schleife ausgebildet sind.

6. Kraftübertragungselement nach Anspruch 1, dadurch gekennzeichnet, daß
die Schraubenfeder (10) endlich und das Zugseil (14) als endlose Schleife ausgebildet ist.
